# EUROPÄISCHE PATENTSCHRIFT

(11) **EP 3 554 812 B1**
(45) Veröffentlichungstag und Bekanntmachung des Hinweises auf die Patenterteilung: **01.07.2026**
(21) Anmeldenummer: 17835581.4
(22) Anmeldetag: 01.12.2017
(51) Int. Cl.: B29D 11/00, G01B 11/27, G01M 11/02, G02B 7/02, G02B 27/62

(54) **VERFAHREN ZUR ULTRAPRÄZISEN ZENTRIERBEARBEITUNG EINER TRANSMITTIVEN ODER REFLEKTIVEN OPTIK**
METHOD FOR ULTRAPRECISE CENTERING OF A TRANSMISSIVE OR REFLECTIVE OPTICAL UNIT
PROCÉDÉ POUR L'USINAGE DE CENTRAGE ULTRAPRÉCIS D'UN DISPOSITIF OPTIQUE DE TRANSMISSION OU DE RÉFLEXION

(30) Priorität: 14.12.2016 DE 102016014834
(43) Veröffentlichungstag der Anmeldung: 23.10.2019
(73) Patentinhaber: InnoLite GmbH, 52070 Aachen (DE)
(72) Erfinder: WENZEL, Christian, 52074 Aachen (DE); WINKELMANN, Ralf, 52538 Gangelt (DE); FREUTEL, Simon, 45479 Mülheim (DE); BÜTZER, Marcel, 9450 Altstätten (CH)
(74) Vertreter: Castell, Klaus
(86) Internationale Anmeldenummer: PCT/DE2017/000408
(87) Internationale Veröffentlichungsnummer: WO 2018/108194

(56) Entgegenhaltungen:
- EP-A1- 1 918 687
- EP-A1- 1 918 687
- DE-A1- 102013 004 738
- DE-A1- 102013 004 738
- DE-A1- 102014 216 694
- DE-A1- 102014 216 694
- DE-B3- 102012 023 377
- DE-B3- 102012 023 377
- DE-B4- 10 322 587
- DE-B4- 10 322 587
- JP-A- H0 337 544
- JP-A- H0 337 544
- US-A1- 2003 214 646
- US-A1- 2003 214 646
- US-A1- 2005 174 566
- US-A1- 2005 174 566
- US-A1- 2012 033 228
- US-A1- 2012 033 228
- US-A1- 2012 133 924
- US-A1- 2012 133 924
- US-A1- 2012 133 951
- US-A1- 2012 133 951
- US-A1- 2015 323 416
- US-A1- 2015 323 416
- US-A1- 2016 306 265
- US-A1- 2016 306 265

## Beschreibung

Die Erfindung betrifft ein Verfahren zur ultrapräzisen Zentrierbearbeitung einer transmittiven oder reflektiven Optik, insbesondere einer Linse mit einer asphärischen oder frei geformten vorderen Linsenfläche, die eine in sich eindeutige Achse oder optische Bezugsachse aufweist. Diese Achse ist in der Regel die Symmetrieachse. Die Optik ist als Linse transmittiv und als Spiegel reflektiv. Sie kann der vorderen Linsenfläche gegenüberliegend eine hintere Linsenfläche aufweisen. Auch eine frei geformte vordere Linsenfläche weist eine bestimmte optische Bezugsachse auf, die im Rahmen der Erfindung mit Achse oder Symmetrieachse bezeichnet wird. Insbesondere betrifft das Verfahren die Zentrierbearbeitung durch abtragende Verfahren von Referenzflächen gefasster Linsen. Besonders vorteilhaft ist es, wenn die Optik eine vordere transmittive oder reflektive Fläche hat, die als asphärische vordere Fläche eine eindeutige optische Achse als Symmetrieachse aufweist.

Es ist bekannt, sphärische und plane Linsenflächen durch Drehen von Referenzflächen gefasster Linsen zentriert zu bearbeiten. Eine einzelne sphärische Linsenfläche weist noch keine eindeutige optische Symmetrieachse auf. Bei derartigen Linsen mit sphärischen und/oder planen Einzelflächen ist die optische Achse definiert als die Verbindung der Krümmungsmittelpunkte der jeweiligen Einzelflächen. Die Bestimmung der optischen Achse einer beispielsweise bikonvexen sphärischen Linse über die Lage der Krümmungsmittelpunkte mit Autokollimatoren oder Fokallasersystemen wird in der DE 10 2004 029 735 C5 beschrieben. Die ermittelte optische Achse wird durch Zentrierdrehen hinsichtlich translatorischem und rotatorischem Versatz zu Referenzflächen einer Fassung zur Aufnahme der Linse ausgerichtet.

Beim Zentrierdrehen wird nach Einkleben der Linse in eine Fassung und vollständigem Aushärten des Klebers eine Referenzfläche der Fassung derart spanend bearbeitet, dass sie nach der Bearbeitung in definierter geometrischer Lage zu der optischen Achse liegt. Das Zentrierdrehen kann dabei durch Zentrierdrehfutter oder wie in der DE 10 322 587 B4 beschrieben, durch dynamisches Unrunddrehen erfolgen.

Autokollimatoren und konfokale Lasermesssysteme können die geometrische Lage einzelner asphärischer Flächen nicht exakt bestimmen. Bei geringer Asphärizität kann in sphärischer Näherung gemessen werden. Die Fehler im optischen System können jedoch abhängig von der asphärischen Linsengeometrie bei einer derartigen Messung in asphärischer Approximation leicht die üblichen Toleranzanforderungen überschreiten. Übliche Messwerte zur Ermittlung der Linsengeometrie sind Exzentrizität, translatorischer Versatz, der unter zwei µm liegen sollte, Verkippung und rotatorischer Versatz, der unter 0,2 arcmin liegen sollte.

Die DE 10 2006 052 047 A1 beschreibt bei einer Messung auf einem Zentrierarbeitsplatz den Einsatz eines weiteren Sensors als Ergänzung zu der beschriebenen Autokollimatormessung. Der Autokollimator misst in sphärischer Näherung, während ein weiterer Sensor durch einen Umfangsscan (Orbitscan) auf der Linse in definierter fixierter Position zusätzliche Informationen zur Lage der asphärischen Linsenfläche generiert (Sinuswerte, Amplitude und Frequenz). Diese Informationen werden im Stand der Technik mit der Autokollimatormessung verrechnet.

Der bekannte Ansatz ist für übliche Zentrierarbeitsplätze vorteilhaft, da derartige Systeme über keine präzisen mechanischen Positionierachsen verfügen. Eine in Absolutkoordinaten präzise Bewegungsführung von Sensoren zum Scannen und Messen der Oberfläche ist bei dem bekannten Vorgehen nicht notwendig. Für die jeweilig einzustellende Fokuslage der Sensoren zur Linsenoberfläche kann die Messung vollständig bei ortsfester Sensorposition durchgeführt werden. Lediglich der Prüfling, wie im vorliegenden Fall die Linsenoberfläche, rotiert auf einer in der Regel luftgelagerten hochpräzisen Rotationsachse unterhalb der Sensoren. Diese rotative Bewegungsführung korreliert direkt mit der erzielbaren Messgenauigkeit eines derartigen Zentrierprüfstands. Nachteilhaft ist jedoch die Notwendigkeit der Nutzung zweier kostenintensiver Sensoren zur Messung.

Im Gegensatz zu konventionellen Zentrierarbeitsflächen verfügen ultrapräzise Zentrierdrehmaschinen auf der Basis eines Zentrierfutters oder dem Prinzip des Unrundrehens über hochpräzise Linear- und Rotationsachsen, wodurch sich scannende Ansätze zur Ortslagebestimmung asphärischer Flächen und zur anschließenden Zentriedrehbearbeitung von Asphären in nur einer Maschine ergeben. Die hierfür notwendige Lagebestimmung von asphärischen Flächen alleine auf einer Messmaschine ist durch Veröffentlichungen von Taylor Hobson, Luphos, Mahr oder Panasonic bekannt.

Ausgehend von diesem Stand der Technik liegt der Erfindung die Aufgabe zugrunde, die ultrapräzise Zentrierbearbeitung zu vereinfachen.

Diese Aufgabe wird mit einem Verfahren mit den Merkmalen des Patentanspruchs 1 gelöst. Vorteilhafte Weiterbildungen sind Gegenstand der Unteransprüche.

Bei diesem Verfahren wird nur ein Sensor mit den Achsen einer ultrapräzisen Zentrierdrehmaschine scannend über die Oberfläche einer asphärischen oder frei geformten Fläche einer Optik geführt, deren Orientierung nicht bekannt ist. Hierfür wird kein Autokollimator benötigt. Der hierfür verwendete Sensor ist taktil, optisch oder ein anders gearteter scannender Punkt- oder Liniensensor. Dieser Sensor wird über die Oberfläche geführt, um einen Linienscan, einen Rotationsscan, einen Spiralscan oder ein ähnliches Abbild zu erzeugen. Im einfachsten Fall scannt ein Sensor mäandrierend über die Oberfläche. Hieraus können Punkt- oder Liniendaten erfasst werden.

Anschließend wird mit Routinen in der Maschinensteuerung oder einem gekoppelten Rechner die Lage als Dezentrierung und Verkippung der Optik, wie insbesondere der asphärischen Linsenfläche bezogen auf eine Referenzachse aus den scannend ermittelten Messdaten berechnet. Insbesondere bei taktil scannenden Verfahren kann eine inkludierte Radiuskompensation beim Berechnungsalgorithmus durchgeführt werden, da anders als bei Sphären ein definiertes Ergebnis für einzelne asphärische Oberflächen existiert.

Anschließend werden Referenzflächen der Optik, der Linsenfassung oder der Linse selbst durch abtragende Verfahren auf der Basis der zuvor ermittelten Messdaten derart korrigierend bearbeitet, dass die Achse der Asphäre in einer definierten Lage zur Fassungsgeometrie, d. h. den Referenzflächen an der Fassung, liegt. In definierter Lage kann hierbei zentrisch orientiert, definiert exzentrisch oder in freier definierter Lage sein. Die Lagekorrektur durch abtragende Bearbeitung kann durch eine Justage der Linsenfassungsposition (Zentrierfutter) oder durch eine Ausgleichsbewegung des Werkzeugs erfolgen.

Je nach Ausbildung der der asphärischen vorderen Linsenfläche gegenüberliegenden hinteren Linsenfläche wird anstelle der Symmetrieachse der vorderen Linsenfläche eine gewichtete optische Achse als Grundlage für die korrigierende Bearbeitung der Referenzflächen der Linse oder der Linsenfassung verwendet.

Sofern dieses Verfahren für eine Linse mit einer planen hinteren Linsenfläche verwendet wird, wird eine Normale zu der planen Fläche an einem Punkt der hinteren Linsenfläche ermittelt und die gewichtete optische Achse aus der Symmetrieachse der vorderen Linsenfläche und der Normalen der hinteren Linsenfläche ermittelt.

Sofern das Verfahren für eine Linse mit einer sphärischen hinteren Linsenfläche verwendet wird, kann der Krümmungsmittelpunkt der hinteren Linsenfläche ermittelt werden und die gewichtete optische Achse wird dann aus der Symmetrieachse der vorderen Linsenfläche und dem Krümmungsmittelpunkt der hinteren Linsenfläche ermittelt.

Die Normale der Planfläche bzw. der Krümmungsmittelpunkt der sphärischen Rückseite kann durch einen Autokollimator oder ein konfokales Lasersystem ermittelt werden. Dabei ist ein Umspannen der Linse nicht erforderlich.

Sofern auch die hintere Linsenfläche asphärisch ausgebildet ist, können durch scannendes Führen eines Sensors mit den Achsen der ultrapräzisen Zentriermaschine über die asphärische hintere Linsenfläche die Oberflächendaten ermittelt werden. Anschließend wird die Lage der asphärischen hinteren Linsenfläche in Bezug auf die Referenzachse der Zentrierdrehmaschine auf der Basis der ermittelten Oberflächendaten berechnet und die gewichtete optische Achse wird aus der Symmetrieachse der vorderen Linsenfläche und der Symmetrieachse der hinteren Linsenfläche ermittelt.

Die zweite rückseitige asphärische Fläche kann dabei durch Umspannen der Optik, d. h. ein umgedrehtes Einspannen der Linse und scannendes Führen des Sensors über die hintere Linsenfläche ermittelt werden. Alternativ können die Oberflächendaten der asphärischen hinteren Linsenfläche durch scannendes Führen eines rückseitig angeordneten Sensors über die hintere Linsenfläche ermittelt werden.

Die Lage der asphärischen vorderen oder hinteren Linsenfläche kann durch Routinen in der Maschinensteuerung oder gekoppelte Rechner berechnet werden.

Vorteilhaft ist es, wenn für die korrigierende Bearbeitung eine Justage der Linsenfassungsposition durch ein Zentrierfutter erfolgt. Nachdem die optische Achse bestimmt worden ist, wird das Justierfutter benutzt, um die optische Achse und die als Referenzachse dienende Spindelachse so zueinander auszurichten, dass sie genau deckungsgleich sind. Wenn nun beispielsweise die Fassung drehend bearbeitet wird, liegt die optische Achse zentrisch zu dem entstehenden Zylinder.

Alternativ kann die korrigierende Bearbeitung auch durch eine Ausgleichsbewegung eines Werkzeugs mittels dynamisch angesteuerter Achsen der Zentrierdrehmaschine erfolgen. Anders als beim Justierfutter werden hier die Achsen der Zentrierdrehmaschine dynamisch synchronisiert angesteuert, sodass nach der Bearbeitung der Zylinder der Fassung in einer definierten Position zur optischen Achse steht. Ein derartiges Verfahren ist beispielsweise in der DE 10 322 587 B4 beschrieben.

Das erfindungsgemäße Verfahren wird anhand der Zeichnung näher erläutert. Es zeigt
- Figur 1: eine asphärische Linsenoberfläche mit Symmetrieachse,
- Figur 2: eine bikonvexe Linse mit zwei Krümmungsmittelpunkten,
- Figur 3: eine gefasste Linse mit optischer Achse,
- Figur 4: die Scankontur eines Strahlenscans,
- Figur 5: die Scankontur eines Orbitscans,
- Figur 6: die Scankontur eines Spiralscans,
- Figur 7: die Messung und Korrektur einer Linse mit sphärischer Rückseite im Hinblick auf die Asphärenseite,
- Figur 8: die Messung und Korrektur einer Linse mit sphärischer Rückseite in Bezug auf die Rückseite und
- Figur 9: die Messung und Korrektur an einer Linse mit asphärischer Vorderseite und asphärischer Rückseite.

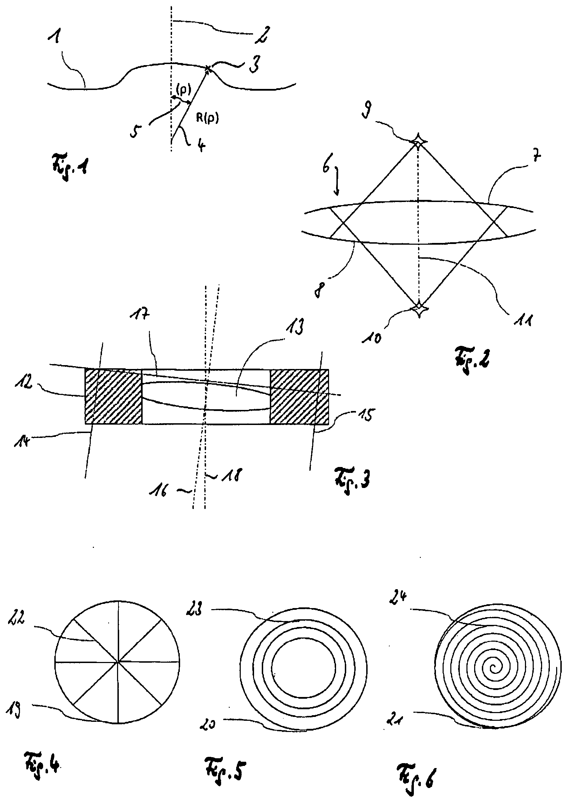

Die Figur 1 zeigt eine asphärische Oberfläche 1 mit einer optischen Symmetrieachse 2. In der Schnittdarstellung der rotationssymmetrischen Oberfläche wird die Krümmung im Bereich einer Kreislinie 3 durch den Radius 4 und den Winkel 5 festgelegt.

Die Figur 2 zeigt eine Linse 6 mit sphärischen Einzelflächen 7, 8, die die Krümmungsmittelpunkte 9, 10 definieren. Die Verbindungslinie zwischen den Krümmungsmittelpunkten 9 und 10 ist die optische Achse 11.

Bei einer in eine Fassung 12 eingeklebten Linse 13 werden Referenzflächen 14, 15 der Fassung derart spanend bearbeitet, dass sie zu der optischen Achse 16 der Linse 13 nach der Bearbeitung in definiert geometrischer Lage liegt. In dem in Figur 3 gezeigten Bespiel begrenzen die Linien 14, 15 und 17 diejenigen Flächen, die beim Zentrierdrehen entfernt werden müssen, damit die Lage der Linse aus der ursprünglichen Achse 18 in die optische Achse 16 überführt wird.

Die Figuren 4 bis 6 zeigen Möglichkeiten, einen Sensor über eine Oberfläche 19, 20 oder 21 als Linienscan 22, Rotationsscan 23 oder Spiralscan 24 zu führen, um Punkt- oder Liniendaten zu erfassen.

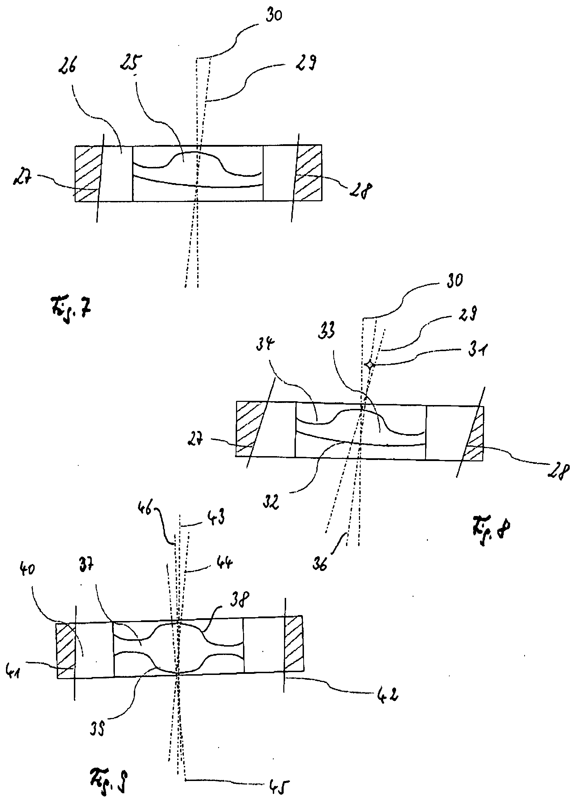

Die Figur 7 zeigt eine Linse 25, die in einer Linsenfassung 26 gehalten ist. Durch die Messung wird die Lage der Symmetrieachse 29 der asphärischen Linsenfläche mit Bezug zur Referenzachse 30 bestimmt (Dezentrierung und Verkippung). Eine korrigierende Bearbeitung der Referenzflächen 27, 28 wird bezogen auf die Symmetrieachse 29 durchgeführt.

Die Vermessung des Krümmungsmittelpunktes 31 der Rückseite 32 der Linse 33 wird dazu genutzt, zusammen mit der durch Scannen ermittelten Symmetrieachse 29 der asphärischen Oberfläche 34 eine gewichtete optische Achse 36 mit Bezug zur Referenzachse 30 zu berechnen. Eine korrigierende Bearbeitung der Referenzflächen 27, 28 wird bezogen auf die gewichtete optische Achse 36 durchgeführt.

Die Figur 9 zeigt die ultrapräzise Zentrierbearbeitung an einer Linse 37 mit einer asphärischen Vorderseite 38 und einer asphärischen Rückseite 39. Die Linse ist in eine Linsenfassung 40 eingeklebt. Die Symmetrieachse 44 der vorderen Linsenoberfläche 38 und die Symmetrieachse 45 der hinteren Linsenoberfläche 39 werden mit Bezug zur Referenzachse 43 zur gewichteten optischen Achse 46 gemittelt. Eine korrigierende Bearbeitung der Referenzflächen 41, 42 wird bezogen auf die gewichtete optische Achse 46 durchgeführt.

## Patentansprüche

1. Verfahren zur ultrapräzisen Zentrierbearbeitung einer transmittiven oder reflektiven Optik, insbesondere einer Linse, mit einer asphärischen oder frei geformten vorderen Fläche, die eine in sich eindeutige Achse (21) aufweist, mit den folgenden Schritten:
- Einspannen der Optik in einer ultrapräzisen Zentrierdrehmaschine,
- Berechnen der Lage der vorderen Fläche (14) in Bezug auf eine Referenzachse (27) der Zentrierdrehmaschine auf der Basis von ermittelten Oberflächendaten,
- korrigierende Bearbeitung von Referenzflächen (18) der Optik (20) oder einer Linsenfassung (19) durch abtragende Verfahren mit der Zentrierdrehmaschine derart, dass die Achse (21) oder eine gewichtete optische Achse in einer definierten Lage zu den Referenzflächen (18) liegt, ***dadurch gekennzeichnet, dass***
ein taktil, optisch oder anders gearteter scannender Punkt- oder Liniensensor mit den Achsen der ultrapräzisen Zentrierdrehmaschine scannend über die vordere Fläche (14) geführt wird, um zur Ermittlung von Oberflächendaten einen Linienscan, einen Rotationsscan, einen Spiralscan oder ein ähnliches Abbild zu erzeugen und anschließend mit Routinen in der Maschinensteuerung oder einem gekoppelten Rechner die Lage als Dezentrierung und Verkippung der Optik aus den scannend ermittelten Oberflächendaten berechnet wird.

2. Verfahren nach Anspruch 1 für eine Linse mit einer planen hinteren Linsenfläche, ***dadurch gekennzeichnet, dass*** eine Normale zu der planen hinteren Linsenfläche an einem Punkt der hinteren Linsenfläche ermittelt wird und eine gewichtete optische Achse aus der Achse (21) der vorderen Linsenfläche (14) und der Normalen der hinteren Linsenfläche ermittelt wird.

3. Verfahren nach Anspruch 1 für eine Linse mit einer sphärischen hinteren Linsenfläche, ***dadurch gekennzeichnet, dass*** der Krümmungsmittelpunkt (24) der hinteren Linsenfläche (23) ermittelt wird und die gewichtete optische Achse aus der Achse (21) der vorderen Linsenfläche (14) und dem Krümmungsmittelpunkt (24) der hinteren Linsenfläche ermittelt wird.

4. Verfahren nach Anspruch 3, ***dadurch gekennzeichnet, dass*** der Krümmungsmittelpunkt (24) durch einen Autokollimator oder ein konfokales Lasermesssystem ermittelt wird.

5. Verfahren nach Anspruch 1 für eine Linse mit einer asphärischen hinteren Linsenfläche, ***dadurch gekennzeichnet, dass*** durch scannendes Führen eines Sensors mit den Achsen der ultrapräzisen Zentrierdrehmaschine über die asphärische hintere Linsenfläche (23) die Oberflächendaten ermittelt werden, die Lage der asphärischen hinteren Linsenfläche (23) in Bezug auf die Referenzachse (27) der Zentrierdrehmaschine auf der Basis der ermittelten Oberflächendaten berechnet wird und die gewichtete optische Achse aus der Achse (21) der vorderen Linsenfläche und der Symmetrieachse (28) der hinteren Linsenfläche ermittelt wird.

6. Verfahren nach Anspruch *5, **dadurch gekennzeichnet, dass*** die Oberflächendaten der asphärischen hinteren Linsenfläche durch umgedrehtes Einspannen der Linse und scannendes Führen des Sensors über die hintere Linsenfläche ermittelt werden.

7. Verfahren nach Anspruch *5, **dadurch gekennzeichnet, dass*** die Oberflächendaten der asphärischen hinteren Linsenfläche durch scannendes Führen eines rückseitig angeordneten Sensors über die hintere Linsenfläche ermittelt werden.

8. Verfahren nach einem der vorhergehenden Ansprüche, ***dadurch gekennzeichnet, dass*** die Lage der Optik und insbesondere der asphärischen vorderen oder hinteren Linsenfläche durch Routinen in der Maschinensteuerung oder gekoppelte Rechner berechnet wird.

9. Verfahren nach einem der vorhergehenden Ansprüche, ***dadurch gekennzeichnet, dass*** für die korrigierende Bearbeitung eine Justage der Linsenfassungsposition durch ein Zentrierfutter erfolgt.

10. Verfahren nach einem der Ansprüche 1 bis 8, ***dadurch gekennzeichnet, dass*** die korrigierende Bearbeitung durch eine Ausgleichsbewegung eines Werkzeugs mittels dynamisch angesteuerter Achsen der Zentrierdrehmaschine erfolgt.

## Claims

1. A method for the ultra-precise centring of a transmissive or reflective optical unit, in particular a lens, with an aspheric or freeform front surface that has a unique axis (21), with the following steps:
- clamping the optical unit in an ultra-precise centring lathe,
- calculating the position of the front surface (14) relative to a reference axis (27) of the centring lathe based on determined surface data,
- corrective treatment of reference surfaces (18) of the optical unit (20) or a lens mount (19) by means of ablative methods using the centring lathe in such a manner that the axis (21) or a weighted optical axis lies in a defined position relative to the reference surfaces (18), ***characterized in that***
a tactile, optical, or other type of scanning point or line sensor is guided while scanning over the front surface (14) along the axes of the ultra-precision centring lathe in order to generate a line scan, a rotational scan, a spiral scan, or a similar image to determine surface data, and subsequently, using routines in the machine control system or a linked computer, the position is calculated as a misalignment and tilt of the optical unit based on the surface data determined by the scan.

2. The method according to claim 1 for a lens with a planar rear lens surface, ***characterized in that*** a normal to the planar rear lens surface is determined at a point on the rear lens surface, and a weighted optical axis is determined from the axis (21) of the front lens surface (14) and the normal to the rear lens surface.

3. The method according to claim 1 for a lens with a spherical rear lens surface, ***characterized in that*** the centre of curvature (24) of the rear lens surface (23) is determined, and the weighted optical axis is determined from the axis (21) of the front lens surface (14) and the centre of curvature (24) of the rear lens surface.

4. The method according to claim 3, ***characterized in that*** the centre of curvature (24) is determined using an autocollimator or a confocal laser measurement system.

5. The method according to claim 1 for a lens having an aspheric rear lens surface, ***characterized in that*** the surface data is determined by scanning the aspheric rear lens surface (23) with a sensor guided over the axes of the ultra-precision centring lathe, the position of the aspheric rear lens surface (23) relative to the reference axis (27) of the centring lathe is calculated based on the determined surface data, and the weighted optical axis is determined from the axis (21) of the front lens surface and the axis of symmetry (28) of the rear lens surface.

6. The method according to claim *5, **characterized in that*** the surface data of the aspheric rear lens surface is determined by mounting the lens upside down and scanning the rear lens surface with the sensor guided over the rear lens surface.

7. The method according to claim 5, ***characterized in that*** the surface data of the aspheric rear lens surface is determined by scanning the rear lens surface with a sensor positioned on the rear side, which is guided over the rear lens surface.

8. The method according to one of the preceding claims, ***characterized in that*** the position of the optical unit and, in particular, of the aspheric front or rear lens surface is calculated by routines in the machine control system or a linked computer.

9. The method according to one of the preceding claims, ***characterized in that,*** for the corrective treatment, an adjustment of the position of the lens mount is carried out using a centring chuck.

10. The method according to one of claims 1 to 8, ***characterized in that*** the corrective treatment is carried out by a compensating movement of a tool using dynamically controlled axes of the centering lathe.

## Revendications

1. Procédé pour l'usinage de centrage ultraprécis d'un dispositif optique de transmission ou de réflexion, en particulier d'une lentille, avec une surface avant asphérique ou de forme libre qui présente un axe (21) unique, comprenant les étapes suivantes :
- serrage de l'élément optique dans un tour de centrage ultraprécis,
- calcul de la position de la surface avant (14) par rapport à un axe de référence (27) du tour de centrage sur la base des données de surface déterminées,
- traitement correctif de surfaces de référence (18) du dispositif optique (20) ou d'une monture de lentille (19) par des procédés d'enlèvement de matière à l'aide du tour de centrage, de telle sorte que l'axe (21) ou un axe optique pondéré se trouve dans une position définie par rapport aux surfaces de référence (18), ***caractérisé en ce que***
un capteur à balayage ponctuel ou linéaire, tactile, optique ou de toute autre nature, est guidé en balayage sur la surface avant (14) selon les axes du tour de centrage ultraprécis, afin de générer, pour la détermination des données de surface, un scan linéaire, un scan rotatif, un scan en spirale ou une image similaire, et que la position est ensuite calculée, en tant que décentrage et inclinaison de l'optique à partir des données de surface déterminées par balayage, à l'aide de routines dans la commande de la machine ou d'un ordinateur couplé.

2. Procédé selon la revendication 1 pour une lentille avec une surface de lentille arrière plane, ***caractérisé en ce qu***'une normale à la surface de lentille arrière plane est déterminée en un point de la surface de lentille arrière et qu'un axe optique pondéré est déterminé à partir de l'axe (21) de la surface de lentille avant (14) et de la normale à la surface de lentille arrière.

3. Procédé selon la revendication 1 pour une lentille avec une surface de lentille arrière sphérique, ***caractérisé en ce que*** le centre de courbure (24) de la surface de lentille arrière (23) est déterminé et l'axe optique pondéré est déterminé à partir de l'axe (21) de la surface de lentille avant (14) et du centre de courbure (24) de la surface de lentille arrière.

4. Procédé selon la revendication 3, ***caractérisé en ce que*** le centre de courbure (24) est déterminé à l'aide d'un autocollimateur ou d'un système de mesure laser confocal.

5. Procédé selon la revendication 1 pour une lentille ayant une surface de lentille arrière asphérique, ***caractérisé en ce que*** les données de surface sont déterminées en guidant en balayage un capteur, en alignement avec les axes du tour de centrage ultraprécis, sur la surface de lentille arrière asphérique (23), la position de la surface de lentille arrière asphérique (23) par rapport à l'axe de référence (27) du tour de centrage est calculée sur la base des données de surface déterminées, et l'axe optique pondéré est déterminé à partir de l'axe (21) de la surface de lentille avant et de l'axe de symétrie (28) de la surface de lentille arrière.

6. Procédé selon la revendication 5*, **caractérisé en ce que*** les données de surface de la surface de lentille arrière asphérique sont déterminées en serrant la lentille à l'envers et en guidant en balayage le capteur sur la surface de lentille arrière.

7. Procédé selon la revendication 5*, **caractérisé en ce que*** les données de surface de la surface de lentille arrière asphérique sont déterminées en guidant en balayage un capteur disposé à l'arrière sur la surface de lentille arrière.

8. Procédé selon l'une des revendications précédentes, ***caractérisé en ce que*** la position du dispositif optique, et en particulier de la surface de lentille asphérique avant ou arrière, est calculée à l'aide de routines dans la commande de la machine ou par un ordinateur couplé.

9. Procédé selon l'une des revendications précédentes, ***caractérisé en ce que,*** pour le traitement correctif, un ajustement de la position de la monture de lentille est effectué à l'aide d'un mandrin de centrage.

10. Procédé selon l'une des revendications 1 à 8, ***caractérisé en ce que*** le traitement correctif est effectué par un mouvement de compensation d'un outil au moyen d'axes à commande dynamique du tour de centrage.
